# FASCICULE DE BREVET EUROPEEN

(11) **EP 3 146 613 B1**
(45) Date de publication et mention de la délivrance du brevet: **10.07.2019**
(21) Numéro de dépôt: 15727589.2
(22) Date de dépôt: 22.05.2015
(51) Int. Cl.: H02J 7/00, B60R 16/023

(54) **SYSTÈME DE BATTERIES ET PROCÉDÉ DE COMMANDE DE CE SYSTÈME**
SYSTEM AUS BATTERIEN UND VERFAHREN ZUR STEUERUNG DIESES SYSTEMS
SYSTEM OF BATTERIES AND METHOD OF CONTROLLING THIS SYSTEM

(30) Priorité: 23.05.2014 FR 1454666
(43) Date de publication de la demande: 29.03.2017
(73) Titulaire: Renault S.A.S., 92100 Boulogne-Billancourt (FR); Bouygues Energies et Services, 78180 Montigny le Bretonneux (FR)
(72) Inventeur: CHAZAL, Yann, F-75015 Paris (FR); CHANTREL, Cédric, F-94220 Charenton Le Pont (FR); FOURNEY, Brice, F-78100 Saint Germain En Laye (FR); CLIN, Fabrice, F-78180 Montigny le Bretonneux (FR); TRINH, Do-Hieu, F-78330 Fontenay le Fleury (FR)
(74) Mandataire: Novagraaf Technologies
(86) Numéro de dépôt international: PCT/EP2015/061402
(87) Numéro de publication internationale: WO 2015/177346

(56) Documents cités:
- WO-A1-2014/037572
- JP-A- 2010 124 536
- US-A1- 2010 123 989
- US-A1- 2014 079 960

## Description

### Domaine technique

La présente invention se rapporte à un système de batteries comportant une pluralité de batteries connectées entre elles. Elle concerne un procédé de commande de ce système.

### Etat de la technique

Dans le domaine non limitatif des véhicules électriques et hybrides, est connue une batterie comportant une pluralité de relais, avec une alimentation secondaire agencée de sorte à fournir des courants de commande des relais, et un superviseur pour piloter la pluralité de relais de la batterie avec les ordres de commande.

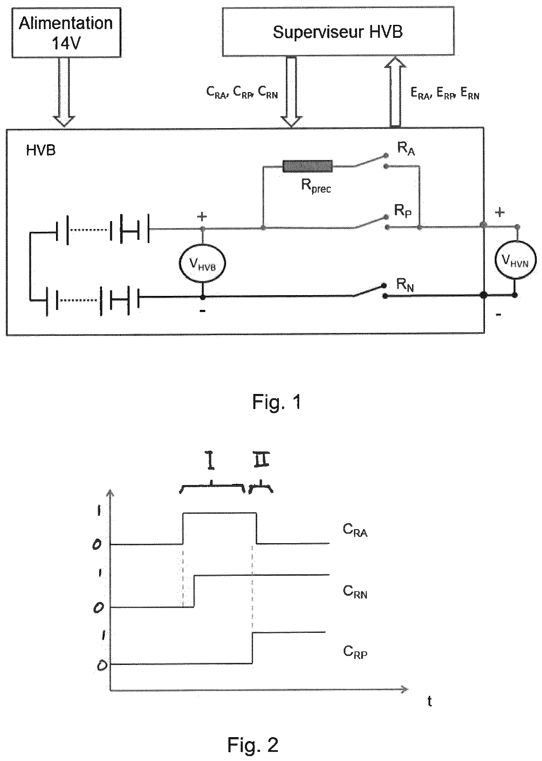

Sur la figure 1 illustrant une batterie selon une technique actuelle, la batterie comprend trois relais R_{A}, R_{P} et R_{N} et une résistance de précharge R_{prec}, un instrument de mesure de tension V_{HVB}, une interface de communication recevant l'ordre de fermeture et d'ouverture des relais (C_{RA}, C_{RP}, C_{RN}) et le retour d'état de relais (E_{RA}, E_{RP}, E_{RN}). La batterie est connectée à deux polarités d'un circuit d'utilisation comportant un ou plusieurs composants d'électronique de puissance de type chargeur, onduleur ou convertisseur DC/DC ; ce ou ces composant(s) déterminent la tension V_{HVN} entre les deux polarités. La résistance de précharge R_{prec} a une grande valeur afin d'établir un courant limité entre la batterie et le circuit d'utilisation permettant d'équilibrer les tensions entre la batterie et les polarités pendant une phase transitoire.

La batterie comporte un premier relais R_{N} et un deuxième relais R_{P} de connexion directe respectivement d'un premier pôle (-) de la batterie à une première des polarités et d'un deuxième pôle (+) à une deuxième des polarités. Elle comporte et en outre un troisième relais R_{A} connectant le deuxième pôle (+) à la deuxième polarité par l'intermédiaire de la résistance de précharge.

La batterie est reliée au superviseur qui pilote l'ouverture et la fermeture des relais C_{RA}, C_{RP}, C_{RN} et qui reçoit des informations (E_{RA}, E_{RP}, E_{RN}) sur l'état des relais, ouverts ou fermés. La séquence de fermeture des relais comporte une phase d'initialisation I et une phase d'établissement II comme montré sur la figure 2. Pendant la phase d'initialisation :
1) Le superviseur vérifie que les relais de la batterie sont ouverts, à savoir E_{RA} = 0, E_{RP} = 0 et E_{RN} = 0. Si cette condition est vérifiée :
2) Le superviseur envoie un ordre C_{RA} = 1 d'activation de la fermeture du troisième relais R_{A}. La batterie commande l'activation de la fermeture du troisième relais R_{A}. Si le troisième relais R_{A} est fermé, la batterie envoie l'état E_{RA} = 1 au superviseur.
3) Si le superviseur reçoit l'état E_{RA} = 1, alors il envoie un ordre C_{RN} = 1 de la fermeture du premier relais R_{N} : La batterie commande la fermeture du premier relais R_{N}. Si le premier relais R_{N} est fermé, la batterie envoie l'état E_{RN} = 1 au superviseur.
4) Le superviseur surveille si la différence entre V_{HVB} et V_{HVN} est inférieure à un seuil prédéterminé, auquel cas il lance la phase d'établissement dans laquelle il envoie un ordre de la fermeture du deuxième relais R_{P} : C_{RP} = 1. La batterie commande la fermeture du deuxième relais R_{P}. Si le deuxième relais R_{P} est fermé, la batterie envoie l'état E_{RP} = 1 au superviseur.
5) Si le superviseur reçoit l'état E_{RP} = 1, alors le superviseur envoie l'ordre de l'ouverture du troisième relais R_{A} : C_{RA} = 0. La batterie commande l'ouverture du troisième relais R_{A}. Si le troisième relais R_{A} est ouvert, la batterie envoie l'état E_{RA} = 0 au superviseur.

La séquence est alors terminée.

Une telle batterie est destinée à être utilisée seule sur un véhicule. Cependant, lorsque les capacités de la batterie ne sont plus suffisantes pour alimenter correctement un véhicule, ou alors pour installer la batterie dans une ferme de rechargement, il est prévu d'installer une pluralité de batteries de ce type ensemble.

Il a été constaté qu'un tel système à plusieurs batteries n'était pas optimal, car dans l'éventualité où plusieurs relais doivent être alimentés en courants de commande simultanément, l'alimentation secondaire doit être capable de fournir un courant total important. En effet, la commutation d'un relais nécessite un courant d'appel assez fort, par exemple de l'ordre de 1A, alors qu'en régime permanent, seul un courant de maintien de l'ordre de 600mA est nécessaire.

Si plusieurs relais sont commandés simultanément, le courant à fournir par l'alimentation secondaire est important et il est nécessaire de calibrer celle-ci en conséquence.

Le document US 2010/123989 divulgue un système de batteries pour un véhicule, chaque batterie étant connectée par l'intermédiaire des trois relais. Les relais pour la connexion d'une batterie utilisent une alimentation secondaire.

Le document JP 2010 124536 divulgue un system de batteries pouvant être connectés par l'intermédiaire des relais. Le système comporte une batterie principale et deux batteries secondaires.

Le document WO 2014/037572 divulgue un procédé de contrôle du fonctionnement de l'alimentation d'un véhicule à moteur électrique. Le système comporte deux module de stockage d'énergie connectés en parallèle.

Le document US 2014/079960 divulgue deux systèmes de batteries, comprenant chacun un système de gestion de batteries. Un des systèmes de gestion fonctionne en « maître » et l'autre en « esclave ». Le système de gestion « maître » contrôle le fonctionnement du système en fonction des informations reçues depuis le système de gestion « esclave ».

L'invention vise à fournir un système de batterie comportant une pluralité de batteries et une alimentation secondaire dont le calibre soit minimisé autant que possible.

### Description de l'invention

Avec ces objectifs en vue, l'invention a pour objet un système de batteries électriques comportant une pluralité de batteries connectées entre elles par deux polarités, chaque batterie comportant au moins deux relais pour connecter des pôles de la batterie aux deux polarités, le système comportant une alimentation secondaire pour fournir une énergie d'activation aux relais, caractérisé en ce qu'il comporte des moyens de supervision pour piloter les relais de manière décalée de telle sorte que chaque activation de relais succède à une activation précédente d'au moins un délai prédéterminé. L'invention est définie dans les revendications.

Le système de supervision permet de s'assurer que l'appel de courant pour la commutation des relais ne concerne à chaque instant qu'un seul relais. Le délai est prédéterminé en fonction des caractéristiques des relais pour que le courant d'alimentation du relais soit
déjà très proche du niveau du courant de maintien après la commande d'activation et l'écoulement dudit délai.

Selon un premier mode de réalisation, les moyens de supervision comportent un superviseur secondaire avec chaque batterie et un superviseur principal connecté à chacun des superviseurs secondaires, chaque superviseur secondaire étant apte à recevoir un ordre de connexion depuis le superviseur principal et à piloter l'activation successive décalée des relais de la batterie correspondante, le superviseur principal étant apte à fournir des ordres de connexion successifs décalés de telle sorte qu'un deuxième ordre est donné après un premier ordre et après que les relais pilotés par le superviseur secondaire ayant reçu le premier ordre ont été activés. Chaque superviseur secondaire garantit que les relais d'une même batterie sont activés successivement. De plus, comme le superviseur principal pilote les superviseurs secondaires les uns après les autres, avec un intervalle suffisant entre deux commandes successives, on garantit qu'un seul relais est en phase d'activation en même temps. Ce système est simple à mettre en oeuvre puisqu'il reprend les superviseurs secondaires qui gèrent individuellement une batterie.

De manière complémentaire, les superviseurs secondaires envoient une information d'état indiquant que les relais sont fermés ou non. Le superviseur peut ainsi synchroniser le déclenchement des ordres successifs en fonction de ces informations d'état. La durée totale pour commander l'ensemble des batteries est optimisée en comparaison à un déclenchement des ordres selon un intervalle prédéfini qui doit être calibré sur les durées les plus longues envisageables.

Selon un deuxième mode de réalisation, les moyens de supervision comportent un superviseur central apte à commander individuellement chaque relais. On peut ainsi optimiser la durée totale pour commander l'ensemble des batteries. En effet, l'intervalle de commutation entre deux relais d'une même batterie est fonction de la durée d'établissement d'un équilibre des tensions entre la batterie et le réseau auquel est connectée. Pendant cet intervalle, qui est généralement plus long que la durée d'établissement du courant de maintien d'un relais, on peut commander l'activation d'autres relais.

De manière particulière, la batterie comporte un premier relais et un deuxième relais de connexion directe respectivement d'un premier pôle de la batterie à une première des polarités et d'un deuxième pôle à une deuxième des polarités, et en outre un troisième relais connectant le deuxième pôle à la deuxième polarité par l'intermédiaire d'une résistance de précharge.

Dans cette configuration et selon le premier mode de réalisation, le superviseur secondaire pilote par exemple dans l'ordre le troisième relais, le premier relais puis le deuxième relais. On réalise ainsi pour chaque batterie la connexion avec la résistance de charge, puis la connexion directe de la batterie aux polarités.

Dans cette configuration et selon le deuxième mode de réalisation, le superviseur central est programmé pour commander dans une phase d'initialisation le troisième puis le premier relais de l'une des batteries puis pour vérifier si, pour une autre batterie dont la phase d'initialisation a été lancée, la différence de tension entre le deuxième pôle et la deuxième polarité est inférieure à un seuil prédéterminé, auquel cas, le superviseur pilote une phase d'établissement dans laquelle le deuxième relais de ladite autre batterie est actionné. On peut ainsi intercaler des activations de relais entre l'activation du premier et du deuxième relais d'une même batterie.

Pendant la phase d'initialisation, les instants de commande du troisième et du premier relais sont espacés par exemple d'un délai de temporisation. Le délai de temporisation est adapté aux caractéristiques du troisième relais, en particulier à son délai d'établissement du courant de maintien.

De manière complémentaire, la phase d'établissement comprend la commande de désactivation du troisième relais. Lorsque les polarités sont connectées directement aux pôles des batteries, il n'est plus nécessaire d'utiliser la résistance de précharge. Elle peut donc être déconnectée.

L'invention a aussi pour objet un procédé de commande d'un système de batteries électriques, le système comportant une pluralité de batteries connectées entre elles par deux polarités, chaque batterie comportant au moins deux relais pour connecter des pôles de la batterie aux deux polarités, le système comportant une alimentation secondaire pour fournir une énergie d'activation aux relais, caractérisé en ce que les relais sont pilotés de manière décalée pour que chaque activation de relais succède à une activation précédente d'au moins un délai prédéterminé.

### Brève description des figures

L'invention sera mieux comprise et d'autres particularités et avantages apparaîtront à la lecture de la description qui va suivre, la description faisant référence aux dessins annexés parmi lesquels :
- la figure 1 représente de manière schématique une batterie et son superviseur selon l'art antérieur ;
- la figure 2 est un diagramme temporel de commande de la batterie de la figure 1 ;
- la figure 3 représente de manière schématique un système de batterie selon un premier mode de réalisation de l'invention ;
- la figure 4 représente de manière schématique un système de batterie selon un deuxième mode de réalisation de l'invention ;
- la figure 5 est un diagramme temporel explicitant le fonctionnement du système de la figure 4.

### DESCRIPTION DETAILLEE

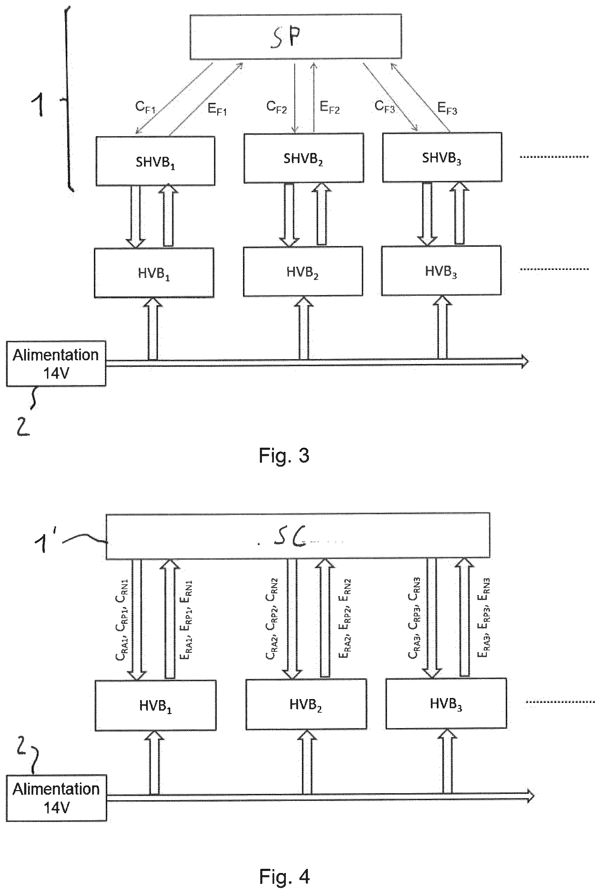

Un système de batteries électriques selon un premier mode de réalisation de l'invention est montré sur la figure 3. Le système comporte une pluralité de batteries HVB₁, HVB₂, HVB₃, connectées entre elles par deux polarités, chaque batterie étant conforme à la batterie décrite selon l'art antérieur et en lien avec les figures 1 et 2. Ainsi, la batterie comporte trois relais pour connecter des pôles de la batterie aux deux polarités. Le système comporte une alimentation secondaire 2 commune à toutes les batteries HVB₁, HVB₂, HVB₃ pour fournir une énergie d'activation aux relais. Chaque batterie est commandée par un superviseur secondaire SHVB₁, SHVB₂, SHVB₃, tandis qu'un superviseur principal SP est connecté à chacun des superviseurs secondaires SHVB₁, SHVB₂, SHVB₃. Le superviseur principal SP et les superviseurs secondaires SHVB₁, SHVB₂, SHVB₃ forment des moyens de supervision 1. Chaque superviseur secondaire SHVB₁, SHVB₂, SHVB₃ est apte à recevoir un ordre de connexion C_{F1}, C_{F2}, C_{F3} depuis le superviseur principal SP. A partir de la réception de cet ordre de connexion C_{F1}, C_{F2}, C_{F3}, le superviseur secondaire SHVB₁, SHVB₂, SHVB₃ met en oeuvre la phase d'initialisation et la phase d'établissement de la même manière que dans l'art antérieur. Ainsi, le superviseur secondaire SHVB₁, SHVB₂, SHVB₃ pilote l'activation successive décalée des relais de la batterie HVB₁, HVB₂, HVB₃ correspondante.

Le superviseur principal SP fournit quant à lui des ordres de connexion C_{F1}, C_{F2}, C_{F3} successifs décalés de telle sorte qu'on s'assure que tous les relais pilotés par le superviseur secondaire SHVB₁ ayant reçu un premier ordre C_{F1} ont été activés avant de délivrer un deuxième ordre C_{F2} au superviseur secondaire SHVB₂ suivant. Pour cela, les superviseurs secondaires SHVB₁, SHVB₂, SHVB₃ envoient une information d'état E_{F1}, E_{F2}, E_{F3} au superviseur principal SP indiquant que les phases d'initialisation et d'établissement sont terminées, et le superviseur principal SP envoie l'ordre de connexion C_{F1}, C_{F2}, C_{F3} suivant après le délai prédéterminé. Ainsi, chaque activation de relais succède à une activation précédente d'au moins le délai prédéterminé.

Selon un deuxième mode de réalisation, représenté sur la figure 3, le système de batteries diffère du système selon le premier mode de réalisation en ce que les moyens de supervision 1' comportent un superviseur central SC apte à commander individuellement chaque relais. Comme dans l'art antérieur, la batterie HVB₁, HVB₂, HVB₃ comporte un premier relais RN et un deuxième relais RP de connexion directe respectivement d'un premier pôle (-) de la batterie à une première des polarités et d'un deuxième pôle (+) à une deuxième des polarités, et en outre un troisième relais RA connectant le deuxième pôle (+) à la deuxième polarité par l'intermédiaire d'une résistance de précharge R_{prec}.

Ainsi, le superviseur central SC est apte à envoyer des commandes d'activation C_{RA1}, C_{RP1}, C_{RN1} pour chaque relais RN, RP, RA d'une première des batteries HVB₁, des commandes d'activation C_{RA2}, C_{RP2}, C_{RN2} pour chaque relais d'une deuxième des batteries HVB₂, des commandes d'activation C_{RA3}, C_{RP3}, C_{RN3} pour chaque relais d'une troisième des batteries HVB₃ etc... Le superviseur central SC est apte à recevoir des états des relais E_{RA1}, E_{RP1}, E_{RN1} pour chaque relais de la première batterie HVB₁, des états des relais E_{RA2}, E_{RP2}, E_{RN2} pour chaque relais de la deuxième batterie HVB₂, des états des relais E_{RA3}, E_{RP3}, E_{RN3} pour chaque relais de la troisième batterie HVB₃ etc...

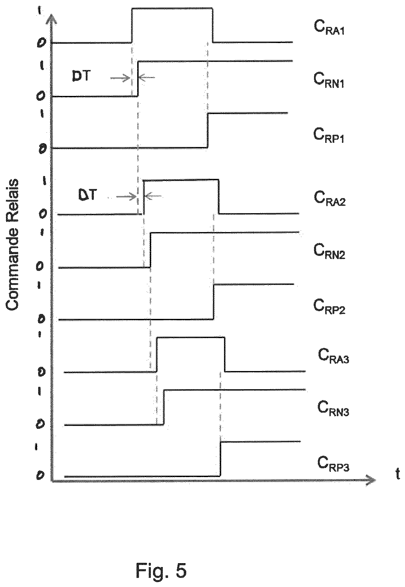

Pour chaque batterie HVBᵢ, référencée par un indice i compris entre 1 et n, n étant le nombre total de batteries HVB du système, le superviseur central SC est programmé pour commander successivement dans une phase d'initialisation le troisième RA puis le premier relais RN de la batterie d'indice i, avec un décalage temporel d'au moins un délai de temporisation DT, comme le montre les deux premières courbes C_{RA1} et C_{RN1} du diagramme de la figure 5. Puis le superviseur central SC vérifie pour une batterie d'indice k compris entre 1 et n si la phase d'initialisation I a été déjà été effectuée et si la différence de tension entre le deuxième pôle (+) et la deuxième polarité V_{HVB}-V_{HVN} est inférieure à un seuil prédéterminé. Dans ce cas, le superviseur pilote une phase d'établissement dans laquelle le deuxième relais RP de la batterie d'indice k est actionné puis le troisième relais RA est désactivé, comme le montre par exemple la première et la troisième courbe C_{RA1} et C_{RP1} du diagramme de la figure 5. Si aucune batterie n'est dans ce cas, le superviseur commande la phase d'initialisation pour la batterie d'indice i+1 avec un décalage temporel d'au moins le délai de temporisation DT entre la commande du premier relais RN de la batterie d'indice i et la commande du troisième relais RA de la batterie d'indice i+1, comme le montre par exemple la quatrième courbe C_{RA2} du diagramme.

Pour chaque activation ou désactivation de l'un des relais RN, RP, RA, le superviseur central SC surveille l'état du relais commandé, par exemple l'état E_{RA1} pour une commande C_{RA1} fournie. Si l'état ne correspond pas à la commande après un certain délai, le superviseur considère que la batterie est hors service et la déconnecte du système en désactivant tous ses relais. Si l'état correspond à la commande, et que le délai de temporisation DT s'est écoulé, la commande suivante est autorisée.

## Revendications

1. Système de batteries électriques comportant une pluralité de batteries (HVB₁, HVB₂, HVB₃) connectées entre elles par deux polarités,chaque batterie comportant un premier relais (RN) et un deuxième relais (RP) de connexion directe respectivement d'un premier pôle (-) de la batterie à une première des polarités et d'un deuxième pôle (+) à une deuxième des polarités, et en outre un troisième relais (RA) connectant le deuxième pôle (+) à la deuxième polarité par l'intermédiaire d'une résistance de précharge, le système comportant une alimentation secondaire (2) pour fournir une énergie d'activation aux relais, des moyens de supervision (1, 1') pour piloter les relais (RN, RP, RA), le troisième relais (RA) étant activé en premier pour la connexion de chaque batterie, l'alimentation secondaire (2) étant commune à toutes les batteries (HVB₁, HVB₂, HVB₃) et **caractérisé en ce que**
- les moyens de supervision (1, 1') sont configurés pour piloter les relais (RN, RP, RA), de manière décalée, de telle sorte
- que chaque activation de relais succède à une activation précédente d'au moins un délai prédéterminé (DT) en fonction des caractéristiques des relais pour que le courant d'alimentation du relais soit déjà très proche du niveau du courant de maintien après la commande d'activation précédente et l'écoulement dudit délai, et
et pour que les batteries soient connectées en parallèle .

2. Système selon la revendication 1, dans lequel les moyens de supervision (1) comportent un superviseur secondaire (SHVB₁, SHVB₂, SHVB₃) avec chaque batterie et un superviseur principal (SP) connecté à chacun des superviseurs secondaires, chaque superviseur secondaire (SHVB₁, SHVB₂, SHVB₃) étant apte à recevoir un ordre de connexion (C_{F1}, C_{F2}, C_{F3}) depuis le superviseur principal (SP) et à piloter l'activation successive décalée des relais de la batterie correspondante, le superviseur principal (SP) étant apte à fournir des ordres de connexion successifs décalés de telle sorte qu'un deuxième ordre est donné après un premier ordre et après que les relais pilotés par le superviseur secondaire (SHVB₁, SHVB₂, SHVB₃) ayant reçu le premier ordre ont été activés

3. Système selon la revendications 2, dans lequel le superviseur secondaire (SHVB₁, SHVB₂, SHVB₃) pilote dans l'ordre le troisième relais (RA), le premier relais (RN) puis le deuxième relais (RP).

4. Système selon la revendication 3, dans lequel les superviseurs secondaires envoient une information d'état (E_{RA1}, E_{RP1}, E_{RN1}) indiquant que les relais (RN, RP, RA) sont fermés ou non.

5. Système selon la revendication 1, dans lequel les moyens de supervision (1') comportent un superviseur central (SC) apte à commander individuellement chaque relais.

6. Système selon la revendication 5, dans lequel le superviseur central (SC) est programmé pour commander dans une phase d'initialisation (I) le troisième puis le premier relais (RN) de l'une des batteries puis pour vérifier si, pour une autre batterie dont la phase d'initialisation (I) a été déclenchée, la différence de tension entre le deuxième pôle (+) et la deuxième polarité est inférieure à un seuil prédéterminé, auquel cas, le superviseur pilote une phase d'établissement (II) dans laquelle le deuxième relais (RP) de ladite autre batterie est actionné.

7. Système selon la revendication 6, dans lequel pendant la phase d'initialisation, les instants de commande du troisième et du premier relais (RN) sont espacés d'un délai de temporisation (DT).

8. Système selon la revendication 6, dans lequel la phase d'établissement comprend la commande de désactivation du troisième relais (RA).

9. Procédé de commande d'un système de batteries électriques, le système comportant une pluralité de batteries (HVB₁, HVB₂, HVB₃) connectées entre elles par deux polarités, chaque batterie comportant un premier relais (RN) et un deuxième relais (RP) de connexion directe respectivement d'un premier pôle (-) de la batterie à une première des polarités et d'un deuxième pôle (+) à une deuxième des polarités, et en outre un troisième relais (RA) connectant le deuxième pôle (+) à la deuxième polarité par l'intermédiaire d'une résistance de précharge,, le système comportant une alimentation secondaire (2) pour fournir une énergie d'activation aux relais,et des moyens de supervision (1, 1') pour piloter les relais (RN, RP, RA), le troisième relais (RA) étant activé en premier pour la connexion de chaque batterie, l'alimentation secondaire (2) étant commune à toutes les batteries (HVB₁, HVB₂, HVB₃), **caractérisé en ce que** les relais (RN, RP, RA) étant pilotés de manière décalée pour que chaque activation de relais succède à une activation précédente d'au moins un délai prédéterminé (DT) en fonction des caractéristiques des relais pour que le courant d'alimentation du relais soit déjà très proche du niveau du courant de maintien après la commande d'activation précédente et l'écoulement dudit délai, et pour que les batteries soient connectées en parallèle.

## Patentansprüche

1. System aus elektrischen Batterien, umfassend eine Vielzahl von Batterien (HVB₁, HVB₂, HVB₃), die untereinander durch zwei Polaritäten verbunden sind, wobei jede Batterie ein erstes Relais (RN) und ein zweites Relais (RP) zur direkten Verbindung jeweils eines ersten Pols (-) der Batterie mit einer ersten der Polaritäten und eines zweiten Pols (+) mit einer zweiten der Polaritäten, und außerdem ein drittes Relais (RA), das den zweiten Pol (+) mit der zweiten Polarität mit Hilfe eines Vorladewiderstands verbindet, umfasst, wobei das System eine sekundäre Versorgung (2) umfasst, um eine Aktivierungsenergie an die Relais bereitzustellen, Überwachungsmittel (1, 1'), um die Relais (RN, RP, RA) zu leiten, wobei das dritte Relais (RA) als erstes für die Verbindung jeder Batterie aktiviert wird, wobei die sekundäre Versorgung (2) allen Batterien (HVB₁, HVB₂, HVB₃) gemeinsam ist, und **dadurch gekennzeichnet, dass**,
- die Überwachungsmittel (1, 1') konfiguriert sind, um die Relais (RN, RP, RA) auf versetzte Weise zu leiten, so dass
- jede Aktivierung von Relais einer vorhergehenden Aktivierung mit mindestens einer vorbestimmten Verzögerung (DT) folgt, je nach den Eigenschaften der Relais, so dass der Versorgungsstrom des Relais schon sehr nahe dem Niveau des Haltestroms nach der vorhergehenden Aktivierungssteuerung und dem Ablauf der Verzögerung ist, und die Batterien parallel verbunden sind.

2. System nach Anspruch 1, wobei die Überwachungsmittel (1) eine sekundäre Überwachungsvorrichtung (SHVB₁, SHVB₂, SHVB₃) mit jeder Batterie und eine Hauptüberwachungsvorrichtung (SP) umfassen, die mit jeder der sekundären Überwachungsvorrichtungen verbunden ist, wobei jede sekundäre Überwachungsvorrichtung (SHVB₁, SHVB₂, SHVB₃) ausgelegt ist, um eine Verbindungsreihenfolge (C_{F1}, C_{F2}, C_{F3}) von der Hauptüberwachungsvorrichtung (SP) zu erhalten und die versetzte aufeinanderfolgende Aktivierung der Relais der entsprechenden Batterie zu leiten, wobei die Hauptüberwachungsvorrichtung (SP) ausgelegt ist, um versetzte aufeinanderfolgende Verbindungsreihenfolgen derart bereitzustellen, dass sich eine zweite Reihenfolge nach einer ersten Reihenfolge und nachdem die von der sekundären Überwachungsvorrichtung (SHVB₁, SHVB₂, SHVB₃) geleiteten Relais, die die erste Reihenfolge erhalten haben, aktiviert wurden, ergibt.

3. System nach Anspruch 2, wobei die sekundäre Überwachungsvorrichtung (SHVB₁, SHVB₂, SHVB₃) in der Reihenfolge das dritte Relais (RA), das erste Relais (RN), dann das zweite Relais (RP) leitet.

4. System nach Anspruch 3, wobei die sekundären Überwachungsvorrichtungen eine Zustandsinformation (E_{RA1} E_{RP1}, E_{RN1}) schicken, die anzeigt, dass die Relais (RN, RP, RA) geschlossen sind oder nicht.

5. System nach Anspruch 1, wobei die Überwachungsmittel (1') eine zentrale Überwachungsvorrichtung (SC) umfassen, die ausgelegt ist, um jedes Relais individuell zu steuern.

6. System nach Anspruch 5, wobei die zentrale Überwachungsvorrichtung (SC) programmiert ist, um in einer Initialisierungsphase (I) das dritte, dann das erste Relais (RN) einer der Batterien zu steuern, dann um zu überprüfen, ob, für eine andere Batterie, deren Initialisierungsphase (I) ausgelöst wurde, die Spannungsdifferenz zwischen dem zweiten Pol (+) und der zweiten Polarität geringer als eine vorbestimmte Schwelle ist, in welchem Fall die Überwachungsvorrichtung eine Aufbauphase (II) leitet, in der das zweite Relais (RP) der anderen Batterie betätigt wird.

7. System nach Anspruch 6, wobei während der Initialisierungsphase die Steuerzeitpunkte des dritten und des ersten Relais (RN), um eine Taktverzögerung (DT) beabstandet sind.

8. System nach Anspruch 6, wobei die Aufbauphase die Deaktivierungssteuerung des dritten Relais (RA) umfasst.

9. Steuerverfahren eines Systems aus elektrischen Batterien, wobei das System eine Vielzahl von Batterien (HVB₁, HVB₂, HVB₃) umfasst, die untereinander durch zwei Polaritäten verbunden sind, wobei jede Batterie ein erstes Relais (RN) und ein zweites Relais (RP) zur direkten Verbindung jeweils eines ersten Pols (-) der Batterie mit einer ersten der Polaritäten und eines zweiten Pols (+) mit einer zweiten der Polaritäten, und außerdem ein drittes Relais (RA), das den zweiten Pol (+) mit der zweiten Polarität mit Hilfe eines Vorladewiderstands verbindet, umfasst, wobei das System eine sekundäre Versorgung (2) umfasst, um eine Aktivierungsenergie an die Relais bereitzustellen, und Überwachungsmittel (1, 1'), um die Relais (RN, RP, RA) zu leiten, wobei das dritte Relais (RA) als erstes für die Verbindung jeder Batterie aktiviert wird, wobei die sekundäre Versorgung (2) allen Batterien (HVB₁, HVB₂, HVB₃) gemeinsam ist, **dadurch gekennzeichnet, dass** die Relais (RN, RP, RA) auf versetzte Weise geleitet werden, damit jede Aktivierung von Relais einer vorhergehenden Aktivierung mit mindestens einer vorbestimmten Verzögerung (DT) folgt, je nach den Eigenschaften der Relais, so dass der Versorgungsstrom des Relais schon sehr nahe dem Niveau des Haltestroms nach der vorhergehenden Aktivierungssteuerung und dem Ablauf der Verzögerung ist, und die Batterien parallel verbunden sind.

## Claims

1. System of electric batteries comprising a plurality of batteries (HVB1, HVB2, HVB3) connected to each other by two polarities, each battery comprising a first relay (RN) and a second relay (RP) for direct connection respectively of a first pole (-) of the battery to a first one of the polarities and a second pole (+) to a second one of the polarities, and furthermore a third relay (RA) connecting the second pole (+) to the second polarity across a preload resistance, the system comprising a secondary power supply (2) to provide an activation energy to the relays, means of supervision (1, 1') to control the relays (RN, RP, RA), the third relay (RA) is activated first for the connection of each battery, the secondary power supply (2) being common to all the batteries (HVB1, HVB2, HVB3), **characterized in that**
- the means of supervision (1, 1') are configured to control the relays (RN, RP, RA) in a staggered manner
- so that each activation of a relay follows a previous activation by at least a predetermined time period (DT) as a function of the characteristics of the relays so that the power supply current of the relay is already very close to the maintenance current level after the preceding activation command and the expiration of said time period, and
- so that the batteries are connected in parallel.

2. System according to Claim 1, wherein the means of supervision (1) comprise a secondary supervisor (SHVB₁, SHVB₂, SHVB₃) with each battery and a main supervisor (SP) connected to each of the secondary supervisors, each secondary supervisor (SHVB₁, SHVB₂, SHVB₃) being able to receive a connection order (C_{F1}, C_{F2}, C_{F3}) from the main supervisor (SP) and to control the successive staggered activation of the relays of the corresponding battery, the main supervisor (SP) being able to provide successive staggered connection orders such that a second order is given after a first order and after the relays controlled by the secondary supervisor (SHVB₁, SHVB₂, SHVB₃) having received the first order have been activated.

3. System according to Claim 2, wherein the secondary supervisor (SHVB₁, SHVB₂, SHVB₃) controls in the order of the third relay (RA), the first relay (RN) and then the second relay (RP).

4. System according to Claim 3, wherein the secondary supervisors send state information (E_{RA1}, E_{RP1}, E_{RN1}) indicating that the relays (RN, RP, RA) are closed or not.

5. System according to Claim 1, wherein the means of supervision (1') comprise a central supervisor (SC) able to command each relay individually.

6. System according to Claim 5, wherein the central supervisor (SC) is programmed to command in an initialization phase (I) the third and then the first relay (RN) of one of the batteries and then verify whether, for another battery whose initialization phase (I) has been triggered, the voltage difference between the second pole (+) and the second polarity is less than a predetermined threshold, in which case the supervisor controls an establishment phase (II) in which the second relay (RP) of said other battery is actuated.

7. System according to Claim 6, wherein during the initialization phase, the times for commanding of the third and the first relay (RN) are spaced apart by a delay time (DT).

8. System according to Claim 6, wherein the establishment phase includes the commanding of the deactivation of the third relay (RA).

9. Method for control of a system of electric batteries, the system comprising a plurality of batteries (HVB₁, HVB₂, HVB₃) connected to each other by two polarities, each battery comprising a first relay (RN) and a second relay (RP) for direct connection respectively of a first pole (-) of the battery to a first one of the polarities and a second pole (+) to a second one of the polarities, and furthermore a third relay (RA) connecting the second pole (+) to the second polarity across a preload resistance, the system comprising a secondary power supply (2) to provide an activation energy to the relays,
the third relay (RA) being activated first for the connection of each battery,
the secondary supply (2) being common to all the batteries (HVB1, HVB2, HVB3),
**characterized in that** the relays (RN, RP, RA) are controlled in a staggered manner so that each activation of a relay follows a previous activation by at least a predetermined time period (DT) as a function of the characteristics of the relays so that the power supply current of the relay is already very close to the maintenance current level after the preceding activation command and the expiration of said time period, and so that the batteries are connected in parallel.
